# EUROPEAN PATENT APPLICATION

(11) **EP 4 576 797 A1**
(43) Date of publication of application: **25.06.2025**
(21) Application number: 23854308.6
(22) Date of filing: 10.08.2023
(51) Int. Cl.: H04N 23/57, H04N 5/21

(54) **CAMERA MODULE AND ELECTRONIC DEVICE**

(30) Priority: 15.08.2022 CN 202210975768
(71) Applicant: Vivo Mobile Communication Co., Ltd., Dongguan, Guangdong 523863 (CN)
(72) Inventor: ZHANG, Ping, Dongguan, Guangdong 523863 (CN); XIA, Rui, Dongguan, Guangdong 523863 (CN)
(74) Representative: Lavoix
(86) International application number: PCT/CN2023/112144
(87) International publication number: WO 2024/037406

(57) **Abstract**

This application provides a camera module and an electronic device, and relates to the field of electronic device technologies. The camera module includes a lens assembly, a sleeve assembly, a substrate, and a conductive assembly. The lens assembly is connected to the substrate via the sleeve assembly. The sleeve assembly includes at least two sleeves nested in sequence. For two adjacent sleeves, a first sleeve is nested in a second sleeve, and the first sleeve is capable of moving away from or toward the substrate relative to an axis of the second sleeve. The lens assembly is mounted in at least one target sleeve of the at least two sleeves and is disposed opposite to a photosensitive chip on the substrate. A first end of the conductive assembly is connected to the substrate, a second end of the conductive assembly is connected to the target sleeve, and the target sleeve is conductively connected to a grounding line of the substrate via the conductive assembly.

## Description

### CROSS-REFERENCE TO RELATED APPLICATION

This application claims priority of Chinese Patent Application No. 202210975768.5 filed in China on August 15, 2022, which is incorporated herein by reference in its entirety.

### TECHNICAL FIELD

This application relates to the field of electronic device technologies, and in particular, to a camera module and an electronic device.

### BACKGROUND

In related technologies, camera modules of most electronic devices are telescopic camera modules. A lens is nested in a sleeve. A distance between the lens and a photosensitive chip is controlled through movement of the lens and the sleeve, to perform photography by using an aperture that better matches a photography scene, thereby improving photography effect.

However, because the sleeve in the camera module may be in contact with the outside, due to external static electricity, electromagnetic interference to components in the camera module is caused, resulting in malfunction of the camera module.

### SUMMARY

An objective of embodiments of this application is to provide a camera module and an electronic device, to resolve a technical problem that malfunction of the camera module may be caused due to external static electricity.

To resolve the foregoing technical problem, this application is implemented as follows:
According to a first aspect, an embodiment of this application provides a camera module, including a lens assembly, a sleeve assembly, a substrate, and a conductive assembly.

The lens assembly is connected to the substrate via the sleeve assembly.

The sleeve assembly includes at least two sleeves nested in sequence. For two adjacent sleeves, a first sleeve is nested in a second sleeve, and the first sleeve is capable of moving away from or toward the substrate relative to an axis of the second sleeve.

The lens assembly is mounted in at least one target sleeve of the at least two sleeves and is disposed opposite to a photosensitive chip on the substrate.

A first end of the conductive assembly is connected to the substrate, a second end of the conductive assembly is connected to the target sleeve, and the target sleeve is conductively connected to a grounding line of the substrate via the conductive assembly.

According to a second aspect, an embodiment of this application provides an electronic device, including the camera module according to the first aspect.

The camera module in embodiments of this application includes the lens assembly, the sleeve assembly, the substrate, and the conductive assembly. The lens assembly is connected to the substrate via the sleeve assembly. The sleeve assembly includes at least two sleeves nested in sequence. For two adjacent sleeves, a first sleeve is nested in a second sleeve, and the first sleeve is capable of moving away from or toward the substrate relative to an axis of the second sleeve. The lens assembly is mounted in at least one target sleeve of the at least two sleeves and is disposed opposite to the photosensitive chip on the substrate. The first end of the conductive assembly is connected to the substrate, the second end of the conductive assembly is connected to the target sleeve, and the target sleeve is conductively connected to the grounding line of the substrate via the conductive assembly. In embodiments of this application, the foregoing target sleeve that may be exposed to an external environment is conductively connected to the grounding line of the substrate via the first probe and the second probe, to conduct electrostatic charges on the target sleeve to the grounding line of the substrate, so as to achieve electrostatic discharge and prevent the components in the camera module from being interfered with by static electricity.

### BRIEF DESCRIPTION OF THE DRAWINGS

FIG. 1 is a schematic diagram of a structure of a camera module according to an embodiment of this application;
FIG. 2 is a schematic diagram of a first structure of a conductive assembly according to an embodiment of this application; and
FIG. 3 is a schematic diagram of a second structure of a conductive assembly according to an embodiment of this application.

### DETAILED DESCRIPTION

The technical solutions in embodiments of this application are clearly and completely described below with reference to the accompanying drawings in embodiments of this application. Apparently, the described embodiments are merely some rather than all of embodiments of this application. All other embodiments obtained by a person of ordinary skill in the art based on embodiments of this application without making creative efforts shall fall within the protection scope of this application.

In the specification and claims of this application, the terms "first", "second", and the like are used to distinguish similar objects, but are not used to describe a specific sequence or order. It should be understood that such used data is interchangeable where appropriate so that embodiments of this application can be implemented in an order other than those illustrated or described here. In addition, "and/or" in the description and claims represents at least one of connected objects, and the character "/" generally represents that the preceding and latter associated objects are in an "or" relation.

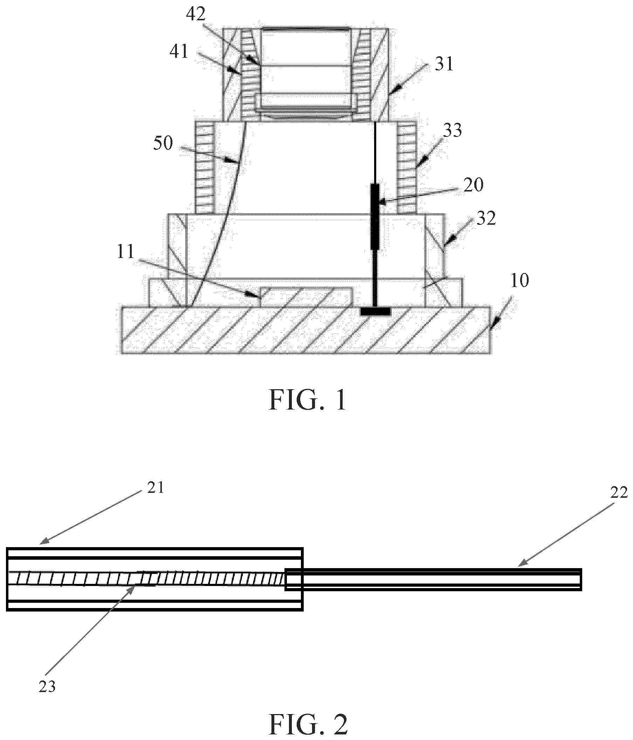

Refer to FIG. 1. FIG. 1 is a schematic diagram of a structure of a camera module according to an embodiment of this application. As shown in FIG. 1, the camera module includes a lens assembly, a sleeve assembly, a substrate 10, and a conductive assembly 20.

The lens assembly is connected to the substrate 10 via the sleeve assembly.

The sleeve assembly includes at least two sleeves nested in sequence. For two adjacent sleeves, a first sleeve is nested in a second sleeve, and the first sleeve is capable of moving away from or toward the substrate 10 relative to an axis of the second sleeve.

The lens assembly is mounted in at least one target sleeve 31 of the at least two sleeves and is disposed opposite to a photosensitive chip 11 on the substrate 10.

A first end of the conductive assembly 20 is connected to the substrate 10, a second end of the conductive assembly 20 is connected to the target sleeve 31, and the target sleeve 31 is conductively connected to a grounding line of the substrate 10 via the conductive assembly 20.

The sleeve assembly in this embodiment includes at least two sleeves nested in sequence. For two adjacent sleeves, a first sleeve is nested in a second sleeve, and the first sleeve is capable of moving relative to an axis of the second sleeve. In other words, the foregoing sleeve assembly is capable of moving away from or toward the substrate 10. A sleeve that is not nested with another sleeves is referred to as the target sleeve 31. The target sleeve 31 is sleeved on the lens assembly, and a lens 42 in the lens assembly is disposed opposite to the photosensitive chip 11 on the substrate 10.

An application principle of this embodiment is as follows. The target sleeve 31 exposed to an external environment is conductively connected to the grounding line of the substrate 10 via the conductive assembly 20, to conduct electrostatic charges on the target sleeve 31 to the grounding line of the substrate 10, so as to achieve electrostatic protection and prevent the components in the camera module from being interfered with by static electricity.

The camera module in this embodiment of this application includes the lens assembly, the sleeve assembly, the substrate 10, and the conductive assembly 20. The lens assembly is connected to the substrate 10 via the sleeve assembly. The sleeve assembly includes at least two sleeves nested in sequence. For two adjacent sleeves, a first sleeve is nested in a second sleeve, and the first sleeve is capable of moving away from or toward the substrate relative to an axis of the second sleeve. The lens assembly is mounted in at least one target sleeve 31 of the at least two sleeves and is disposed opposite to the photosensitive chip 11 on the substrate 10. The first end of the conductive assembly 20 is connected to the substrate 10, the second end of the conductive assembly 20 is connected to the target sleeve 31, and the target sleeve 31 is conductively connected to the grounding line of the substrate 10 via the conductive assembly 20. In this embodiment of this application, the foregoing target sleeve 31 that may be exposed to an external environment is conductively connected to the grounding line of the substrate 10 via a first probe 21 and a second probe 22, to conduct electrostatic charges on the target sleeve 31 to the grounding line of the substrate 10, so as to achieve electrostatic discharge and prevent the components in the camera module from being interfered with by static electricity.

Optionally, the conductive assembly 20 includes the first probe 21 and the second probe 22.

A first end of the first probe 21 is connected to the substrate 10, and a second end of the first probe 21 is provided with a first guide hole. The second probe 22 is partially located in the first guide hole, and an end of the second probe 22 away from the first probe 21 is connected to the target sleeve 31.

In this embodiment, the conductive assembly 20 includes the first probe 21 and the second probe 22. The second end of the first probe 21 is provided with the first guide hole, and the second probe 22 is capable of moving along the first guide hole. In other words, the foregoing conductive assembly 20 is a telescopic conductive assembly 20, and the conductive assembly 20 extends and retracts with the movement of the sleeve assembly.

The foregoing first probe 21 may be fixedly connected to or abut against the substrate 10. The foregoing fixed connection may be welding. In a case that the first probe 21 abuts against the substrate 10, a limiting hole may be provided on the substrate 10, and the first end of the first probe 21 may be disposed in the limiting hole.

The foregoing second probe 22 may be fixedly connected to or abut against the target sleeve 31. The foregoing fixed connection may be welding. In a case that the second probe 22 abuts against the target sleeve 31, a limiting hole may be provided on the target sleeve 31, and an end of the second probe 22 is disposed in the limiting hole.

The first probe 21 and the second probe 22 are both made of conductive materials, for example, copper or aluminum.

Optionally, the conductive assembly 20 further includes a first elastic member 23. The first elastic member 23 is separately connected to the first probe 21 and the second probe 22 to provide elastic force for driving the second probe 22 to move toward the target sleeve 31.

Refer to FIG. 2. As shown in FIG. 2, in this embodiment, the conductive assembly 20 includes the first probe 21, the second probe 22, and the first elastic member 23. The first elastic member 23 is separately connected to the first probe 21 and the second probe 22. When the first elastic member 23 is in an extending state, the first elastic member 23 provides elastic force for driving the second probe 22 to move toward the target sleeve 31. When the first elastic member 23 is in a retracted state, the target sleeve 31 applies force to the second probe 22 to drive the second probe 22 to move toward the substrate 10.

Optionally, the first elastic member 23 is made of conductive materials, for example, copper or aluminum.

Optionally, the first elastic member 23 is a first spring, and the first spring is located in the first guide hole. A first end of the first spring is connected to an inner wall of the first probe 21, and a second end of the first spring is connected to an end of the second probe 22 away from the substrate 10.

In this embodiment, the first elastic member 23 is a spring. As described above, because the second probe 22 is partially located in the first guide hole of the first probe 21, the first end of the first spring that is not connected to the second probe 22 is connected to the inner wall of the first probe 21, the second end of the first spring is connected to the end of the second probe 22 away from substrate 10, and the first spring is located in the first guide hole.

Optionally, the conductive assembly 20 further includes a connecting sleeve 24 and a second elastic member 25. The connecting sleeve 24 is of a hollow structure with openings at both ends. The second end of the first probe 21 is located in the connecting sleeve 24 and is capable of moving along an axis of the connecting sleeve 24. The second elastic member 25 is separately connected to the first probe 21 and the connecting sleeve 24 to provide elastic force for driving the first probe 21 to move toward the substrate 10.

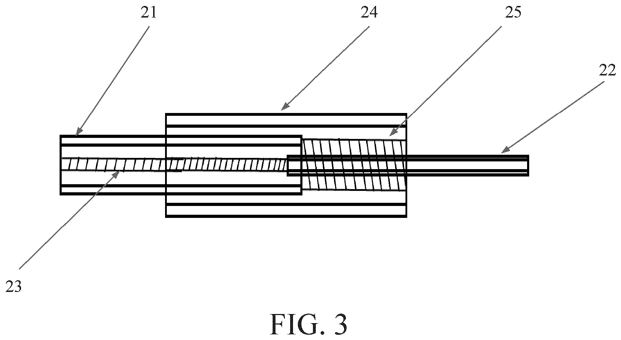

Refer to FIG. 3. As shown in FIG. 3, in this embodiment, the conductive assembly 20 includes the first probe 21, the second probe 22, the connecting sleeve 24, the first elastic member 23, and the second elastic member 25. As described above, the first elastic member 23 is located in the first guide hole of the first probe 21, and the first elastic member 23 is separately connected to the first probe 21 and the second probe 22. The foregoing second elastic member 25 is separately connected to the first probe 21 and the connecting sleeve 24. When the second elastic member 25 is in an extending state, the second elastic member 25 provides elastic force for driving the first probe 21 to move toward the substrate 10. When the second elastic member 25 is in a retracted state, it indicates that the target sleeve 31 applies force to the second probe 22 to drive the second probe 22 to move toward the substrate 10.

Optionally, the second elastic member 25 and the connecting sleeve 24 are made of conductive materials, such as copper and aluminum.

In this embodiment, the second elastic member 25 and the connecting sleeve 24 are added to expand a telescopic range of the conductive assembly 20, so as to increase an optical path distance between the lens 42 and the photosensitive chip 11, thereby improving photography effect.

Optionally, the second elastic member 25 is a second spring, and the second spring is sleeved on the second probe 22. A first end of the second spring is connected to the second end of the first probe 21, and a second end of the second spring is connected to an inner wall of the connecting sleeve 24.

In this embodiment, the foregoing second elastic member 25 is a spring. As mentioned above, because the second end of the first probe 21 is located in the connecting sleeve 24, the second spring is also located in the connecting sleeve 24. The first end of the second spring is connected to the second end of the first probe 21, and the second end of the second spring is connected to the inner wall of the connecting sleeve 24.

Optionally, the first probe 21 and the second probe 22 are located outside an optical path area formed between the lens assembly and the photosensitive chip 11.

The optical path area is formed between the lens assembly and the photosensitive chip 11, and the photosensitive chip 11 obtains light admitted through the optical path area, to implement a photography function. In this embodiment, the first probe 21 and the second probe 22 are disposed outside the optical path area, to avoid affecting the light obtained by the photosensitive chip 11 and reduce stray light crosstalk.

Optionally, the sleeve assembly includes a first-level sleeve 32, a second-level sleeve 33, and a third-level sleeve that are nested in sequence.

The second-level sleeve 33 is nested in the first-level sleeve 32, the third-level sleeve is nested in the second-level sleeve 33, and the third-level sleeve is the target sleeve 31.

As shown in FIG. 1, the sleeve assembly may include three sleeves, namely, the first-level sleeve 32, the second-level sleeve 33, and the third-level sleeve that are nested in sequence. The first-level sleeve 32 is fixedly connected to the substrate 10, and the third-level sleeve is disposed on the lens assembly. It should be understood that FIG. 1 shows a schematic diagram of a structure of a camera module when a sleeve assembly is in an extending state.

It should be understood that the foregoing second sleeve is capable of moving away from the substrate 10 along an axis of the first-level sleeve 32, and the foregoing third-level sleeve is capable of moving away from the substrate 10 along an axis of the second-level sleeve 33, to achieve telescopic adjustments of the sleeve assembly, so as to change the distance between the lens 42 and the photosensitive chip 11 in the lens assembly to implement focusing and zooming.

Optionally, the foregoing first-level sleeve 32 and the third-level sleeve are made of metal, and the second-level sleeve 33 is made of plastic.

Optionally, the lens assembly includes a voice coil motor 41 and the lens 42.

The lens 42 is nested in the voice coil motor 41, and the voice coil motor 41 is nested in the target sleeve 31.

Refer to FIG. 1. In this embodiment, the lens assembly includes the voice coil motor 41 and the lens 42. The voice coil motor 41 is configured to provide force for driving the lens 42 to move away from the substrate 10, so as to adjust the distance between the lens 42 and the photosensitive chip 11 to implement focusing and zooming, thereby improving photography effect.

Optionally, the camera assembly further includes a flexible circuit board 50.

Refer to FIG. 1. A first end of the flexible circuit board 50 is connected to the voice coil motor 41, and a second end of the flexible circuit board 50 is connected to the substrate 10.

In this embodiment, the flexible circuit board 50 is disposed in the camera assembly to power the voice coil motor 41, so that the voice coil motor 41 can drive the lens 42 to move. It should be understood that the foregoing flexible circuit board 50 is located outside the optical path area formed between the lens assembly and the photosensitive chip 11.

An embodiment of this application further provides an electronic device. The electronic device includes the camera assembly provided in the foregoing embodiment. For a detailed implementation of the camera assembly, refer to the foregoing descriptions, and the same technical effect can be achieved. To avoid repetition, details are not described herein.

In this embodiment of this application, the foregoing electronic device may be a computer (Computer), a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), an e-reader, a navigation device, or a digital camera.

Embodiments of this application have been described above with reference to the accompanying drawings. However, this application is not limited to the foregoing specific implementations, and the foregoing specific implementations are merely examples and are not restrictive. A person of ordinary skill in the art may make various variations under the teaching of this application without departing from aims of this application and the protection scope of the claims, all of which fall within the protection scope of this application.

## Claims

1. A camera module, comprising a lens assembly, a sleeve assembly, a substrate, and a conductive assembly, wherein
the lens assembly is connected to the substrate via the sleeve assembly;
the sleeve assembly comprises at least two sleeves nested in sequence, and for two adjacent sleeves, a first sleeve is nested in a second sleeve, and the first sleeve is capable of moving away from or toward the substrate relative to an axis of the second sleeve;
the lens assembly is mounted in at least one target sleeve of the at least two sleeves and is disposed opposite to a photosensitive chip on the substrate; and
a first end of the conductive assembly is connected to the substrate, a second end of the conductive assembly is connected to the target sleeve, and the target sleeve is conductively connected to a grounding line of the substrate via the conductive assembly.

2. The camera module according to claim 1, wherein the conductive assembly comprises a first probe and a second probe, wherein
a first end of the first probe is connected to the substrate, a second end of the first probe is provided with a first guide hole, the second probe is partially located in the first guide hole, and an end of the second probe away from the first probe is connected to the target sleeve;
in a case that the first sleeve moves away from the substrate relative to the axis of the second sleeve, the second probe moves away from the substrate along the first guide hole; and
in a case that the first sleeve moves toward the substrate relative to the axis of the second sleeve, the second probe moves toward the substrate along the first guide hole.

3. The camera module according to claim 2, wherein the conductive assembly further comprises a first elastic member, the first elastic member is separately connected to the first probe and the second probe to provide elastic force for driving the second probe to move toward the target sleeve.

4. The camera module according to claim 3, wherein the first elastic member is a first spring, the first spring is located in the first guide hole, a first end of the first spring is connected to an inner wall of the first probe, and a second end of the first spring is connected to an end of the second probe away from the substrate.

5. The camera module according to claim 3, wherein the conductive assembly further comprises a connecting sleeve and a second elastic member, the connecting sleeve is of a hollow structure with openings at both ends, the second end of the first probe is located in the connecting sleeve and is capable of moving along an axis of the connecting sleeve, the second elastic member is separately connected to the first probe and the connecting sleeve to provide elastic force for driving the first probe to move toward the substrate.

6. The camera module according to claim 5, wherein the second elastic member is a second spring, the second spring is sleeved on the second probe, a first end of the second spring is connected to the second end of the first probe, and a second end of the second spring is connected to an inner wall of the connecting sleeve.

7. The camera module according to any one of claims 2 to 6, wherein the first probe and the second probe are located outside an optical path area formed between the lens assembly and the photosensitive chip.

8. The camera module according to any one of claims 1 to 6, wherein the sleeve assembly comprises a first-level sleeve, a second-level sleeve, and a third-level sleeve that are nested in sequence, wherein
the second-level sleeve is nested in the first-level sleeve, the third-level sleeve is nested in the second-level sleeve, and the third-level sleeve is the target sleeve.

9. The camera module according to any one of claims 1 to 6, wherein the lens assembly comprises a voice coil motor and a lens, wherein
the lens is nested in the voice coil motor, and the voice coil motor is nested in the target sleeve.

10. The camera module according to claim 9, wherein the camera assembly further comprises a flexible circuit board, wherein
a first end of the flexible circuit board is connected to the voice coil motor, and a second end of the flexible circuit board is connected to the substrate.

11. An electronic device, wherein the electronic device comprises the camera module according to any one of claims 1 to 10.
